# EUROPÄISCHE PATENTSCHRIFT

(11) **EP 1 717 066 B1**
(45) Veröffentlichungstag und Bekanntmachung des Hinweises auf die Patenterteilung: **21.04.2010**
(21) Anmeldenummer: 06001579.9
(22) Anmeldetag: 26.01.2006
(51) Int. Cl.: B60D 1/06

(54) **Anhängekupplung**
Trailer hitch
Attache remorque

(30) Priorität: 30.04.2005 DE 102005020163
(43) Veröffentlichungstag der Anmeldung: 02.11.2006
(73) Patentinhaber: WESTFALIA - Automotive GmbH, 33378 Rheda-Wiedenbrück (DE)
(72) Erfinder: Hahn, Jochen, 74223 Flein (DE)
(74) Vertreter: Bregenzer, Michael

(56) Entgegenhaltungen:
- DE-U1- 29 609 507
- US-A- 5 280 941
- US-A1- 2003 034 633

## Beschreibung

Die Erfindung betrifft eine Anhängekupplung für Kraftfahrzeuge gemäß dem Oberbegriff des Anspruchs 1.

Derartige Anhängekupplungen sind in vielfältiger Art bekannt. Dabei kann es sich um Anhängekupplungen mit feststehend oder entfernbar montierter oder bewegbar, insbesondere verschwenkbar gelagerter Kupplungsstange handeln. Im letzteren Falle kann die Kupplungsstange zwischen einer hinten vor das Fahrzeug vorstehenden Gebrauchsstellung und einer nach vorne bewegten, sozusagen versteckt untergebrachten Nichtgebrauchsstellung bewegt werden. Die vorliegende Erfindung ist bei allen diesen Anhängekupplungen anwendbar.

Eine Anhängekupplung, deren Kupplungsstange einen Kupplungsstangenhals und einen daran angeordneten Kupplungskopf gemäß Oberbegriff des Anspruches 1 aufweist, geht beispielsweise aus DE 201 20 530 U1 hervor.

US 2003/0034633 A1 sowie US 5,280,941 betreffen jeweils eine Anhängekupplung mit einer Kupplungsstange, an der ein Kupplungsstangenhals sowie ein Kupplungskopf lösbar befestigt sind. Bei beiden Anhängekupplungen wird die Kupplungskugel von einer Schraube durchsetzt, auf die ein anderes Bauteil aufgeschraubt ist.

Bei einer Anhängekupplung aus DE 296 09 507 U1 ist an einem Kupplungskugelträgerarm eine Kupplungskugel lösbar befestigt. Eine Schraube ist durch die Kupplungskugel hindurch in den Kupplungsträgerarm hinein geschraubt, um die Kupplungskugel am Kupplungskugelträgerarm zu befestigen.

Der hinsichtlich der auftretenden Belastungen kritischste Bereich ist der den Kupplungskopf tragende Kupplungsstangenhals, an dem die Kupplungsstange ihren kleinsten Durchmesser aufweist. Über diesen Kupplungsstangenhals müssen alle vom mit Hilfe der Anhängekupplung an das Zugfahrzeug angehängten Anhänger ausgeübten Kräfte und Momente übertragen werden. Dabei treten beim Anhängerbetrieb auch große dynamische Kräfte auf, die in den Kupplungskopf eingeleitet werden und im Kupplungsstangenhals zu entsprechend großen Biegespannungen führen. Zusätzlich können durch die Verwendung von Spurstabilisierungskupplungen (Schlingerdämpfung für Anhänger) oder wenn im Bereich des Kupplungskopfes ein Fahrradträger oder eine Transportplattform befestigt wird, deren Schwerpunkt verhältnismäßig weit hinter dem Kupplungskopf liegt, erhebliche dynamische Drehmomente entstehen, die in den Kupplungskopf eingeleitet werden und ebenfalls große Biegespannungen und zusätzlich noch Torsionen erzeugen.

Diese Beanspruchungen der Kupplungsstange und dabei insbesondere des Kupplungsstangenhalses nehmen vor allem aufgrund der immer größer werdenden Fahrzeuggewichte und Anhängelasten und der stärkeren Motorisierungen stetig zu.

Um den geschilderten Belastungen stand zu halten und einen Bruch der Kupplungsstange zu vermeiden, muss die Kupplungsstange und dabei insbesondere deren Kupplungsstangenhals entsprechend stabil sein. Dabei kann den größer werdenden Anforderungen durch Verwendung von gegenüber dem ansonsten verwendeten Standardmaterial höherwertigen Materialien Rechnung getragen werden. Dies hat jedoch einen Anstieg der Materialkosten und der mechanischen Bearbeitüngskosten zur Folge.

Ausgehend hiervon liegt der Erfindung die Aufgabe zugrunde, eine Anhängekupplung der eingangs genannten Art zu schaffen, die auf kostengünstige Weise stabil ausgebildet ist.

Diese Aufgabe wird erfindungsgemäß durch eine Anhängekupplung gemäß der technischen Lehre des Anspruchs 1 gelöst.

Durch den Zuganker, zweckmäßigerweise eine Spannschraube, wird in dem einstückig durchgehenden Material der Kupplungsstange mit dem Kupplungsstangenhals und des Kupplungskopfes, und dabei insbesondere im Bereich des Kupplungsstangenhalses, eine Druckspannung erzeugt, so dass man sozusagen eine Materialverfestigung erhält. Diese im Materialgefüge vorhandene Druckspannung stellt eine Vorspannung dar, die äußeren Zugspannungen und Zugspannungsspitzen, die durch äußere dynamische Beanspruchungen (Kräfte und Drehmomente) entstehen, entgegenwirkt. Daher können bei Verwendung des gleichen Materials größere äußere Zugspannungen als seither aufgenommen werden, so dass keine höherwertigen Materialien erforderlich sind. Oder anders ausgedrückt: Das Ergebnis des gesamten Spannungsbildes der resultierenden Zugspannung (tatsächlich zu hohe Zugspannung abzüglich der absichtlich erzeugten Druckspannung) liegt damit innerhalb der zulässigen Werte.

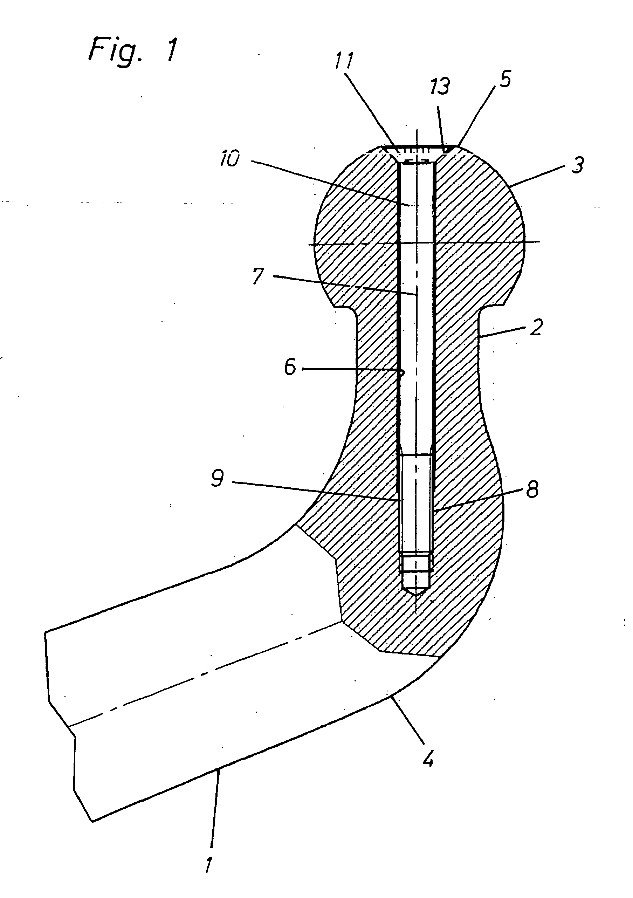

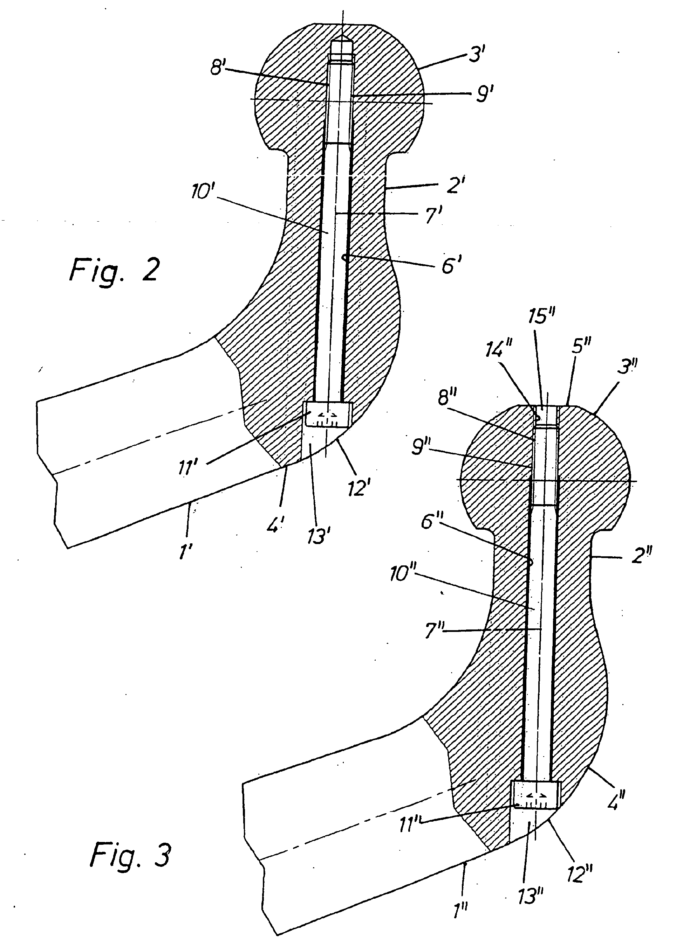

Ausführungsbeispiele der Erfindung werden nachstehend anhand der Zeichnung erläutert, deren Figuren jeweils den den Kupplungskopf tragenden Endbereich einer Kupplungsstange, teilweise im Schnitt, zeigen. Dabei geht aus Figur 1 ein erstes Ausführungsbeispiel und aus den Figuren 2 und 3 zwei Varianten eines zweiten Ausführungsbeispiels hervor, wobei in den Figuren 2 und 3 die gleichen Bezugsziffern wie in Figur 1 unter Hinzufügung eines Strichs (Figur 2) bzw. eines Doppelstrichs (Figur 3) verwendet werden.

Die aus der Zeichnung hervorgehende, abgeschnitten gezeichnete Kupplungsstange 1, 1', 1" ist Bestandteil einer hinten an einem Kraftfahrzeug angeordneten Anhängerkupplung zum Ankuppeln eines Anhängers.

Die üblicherweise aus Metall und dabei insbesondere aus Stahl bestehende Kupplungsstange 1, 1', 1" ragt in ihrer Gebrauchsstellung nach hinten hin über das Kraftfahrzeug vor und weist an ihrem rückwärtigen Ende einen hochstehenden Kupplungsstangenhals 2, 2', 2" auf, an den oben ein kugeliger Kupplungskopf 3, 3', 3" zum lösbaren Befestigen eines Anhängers angesetzt ist. Dabei sind die Kupplungsstange 1, 1', 1" mit dem Kupplungsstangenhals 2, 2', 2" und der Kupplungskopf 3, 3', 3" einstückig miteinander verbunden.

Der Kupplungsstangenhals 2, 2', 2" weist eine zylindrische Gestalt auf. Sein Durchmesser ist genormt und beträgt nach den gegenwärtigen Bestimmungen 29 mm mit einer Toleranz von 2 mm nach unten. Dabei weist der Kupplungsstangenhals 2, 2', 2" einen kleineren Durchmesser als der Kupplungskopf 3, 3', 3" und der dem Kupplungsstangenhals 2, 2', 2" benachbarte Bereich 4, 4', 4" der Kupplungsstange auf, so dass der Kupplungsstangenhals 2, 2', 2" sozusagen der schwächste Bestandteil der Anhängekupplung ist und die maximale Belastbarkeit der Anhängekupplung bestimmt.

Die Kupplungsstange 1, 1', 1" ist in dem genannten Bereich 4, 4', 4" aus ihrem in Gebrauchslage nach hinten gerichteten Verlauf nach oben zum Kupplungsstangenhals 2, 2', 2" hin abgebogen.

Zur Erhöhung der Festigkeit und Stabilität ist der Kupplungsstangenhals 2, 2', 2" mittels eines Zugankers, zweckmäßigerweise in Gestalt einer Spannschraube 10, 10', 10", zwischen dem Kupplungskopf 3, 3', 3" und dem dem Kupplungsstangenhals 2, 2', 2" an der dem Kupplungskopf 3, 3', 3" entgegengesetzten Seite benachbarten Kupplungsstangenbereich 4, 4', 4" verspannt. Durch dieses Verspannen wird im Kupplungsstangenhals 2, 2', 2" eine Druckspannung aufgebaut, die den Kupplungsstangenhals 2, 2', 2" in sich verfestigt, so dass er größere Belastungen aufnehmen kann.

Bei dem Ausführungsbeispiel nach Figur 1 erstreckt sich, ausgehend von der der Kupplungsstange 1 entgegengesetzten Oberseite 5 des Kupplungskopfes 3, eine Bohrung 6 in axialer Richtung 7 des Kupplungsstangenhalses 2 durch den Kupplungskopf 3 und den Kupplungsstangenhals 2 bis in den sich an diesen anschließenden Kupplungsstangenbereich 4, die zumindest im sich an den Kupplungsstangenhals anschließenden Kupplungsstangenbereich 4 eine Gewindepartie 8 mit einem Innengewinde 9 aufweist. Die den Zuganker bildende Spannschraube 10 greift von der Kupplungskopf-Oberseite 5 her in die Bohrung 6 ein und ist mit deren Gewindepartie 8 verschraubt. Die Spannschraube 10 weist einen radial vorstehenden Schraubenkopf 11 auf, der sich am Kupplungskopf 3 abstützt. Die Spannschraube 10 ist fest angezogen, so dass der Kupplungskopf 3, der Kupplungsstangenhals 2 und der anschließende Kupplungsstangenbereich 4 entsprechend fest zusammengespannt sind.

Im Falle der Figuren 2 und 3 ist die Anordnung umgekehrt so getroffen, dass eine von der dem Kupplungskopf 3', 3" entgegengesetzten Unterseite des Kupplungsstangenbereichs 4', 4" ausgehende, sich in axialer Richtung 7', 7" des Kupplungsstangenhalses 2', 2" durch den diesem benachbarten Kupplungsstangenbereich 4', 4" und den Kupplungsstangenhals 2', 2" bis in den Kupplungskopf 3', 3" erstreckende Bohrung 6', 6" vorhanden ist, die zumindest im Kupplungskopf 3', 3" eine Gewindepartie 8', 8" mit einem Innengewinde 9', 9" aufweist. Die Spannschraube 10', 10" greift von der Unterseite 12', 12" des Kupplungsstangenbereichs 4', 4" in die Bohrung 6', 6" ein und ist mit deren Gewindepartie 8', 8" verschraubt. Der Schraubenkopf 11', 11" stützt sich in diesem Falle am dem Kupplungsstangenhals 2', 2" benachbarten Kupplungsstangenbereich 4', 4" ab. Wiederum wird die Spannschraube 10', 10" fest angezogen, so dass ein entsprechend festes Verspannen stattfindet. Die Wirkung ist somit die gleiche wie oben in Zusammenhang mit dem Ausführungsbeispiel nach Figur 1 beschrieben worden ist.

Bei allen Ausführungsbeispielen ist der dem Schraubenkopf 11, 11', 11" zugewandte Endbereich 13, 13', 13" der Bohrung 6, 6', 6" zur Aufnahme des Schraubenkopfes 11, 11', 11" aufgeweitet, so dass der Schraubenkopf 11, 11', 11" mit Bezug auf die Oberseite 5 des Kupplungskopfes 3 beziehungsweise die Unterseite 12', 12" des Kupplungsstangenbereichs 4', 4" vertieft angeordnet ist.

Der mit Bezug auf den Spannschraubenschaft radial vorstehende Schraubenkopf 11, 11', 11" kann auch eine andere Gestalt als der dargestellte Senkkopf (Figur 1) oder zylindrische Kopf (Figuren 2 und 3) aufweisen.

Das Innengewinde 9, 9', 9" ist, in Figur 1 vom Kupplungskopf 3 und in den Figuren 2 und 3 vom dem Kupplungsstangenhals 2', 2" benachbarten Kupplungsstangenbereich 4', 4" aus gesehen, jenseits des Kupplungsstangenhalses 2, 2', 2" angeordnet.

Die die Spannschraube 10, 10' aufnehmende Bohrung 6, 6' endet in den Figuren 1 und 2 im dem Kupplungsstangenhals 2 benachbarten Kupplungsstangenbereich 4 bzw. im Kupplungskopf 3', so dass die jeweilige Bohrung 6, 6' eine Sackbohrung ist.

Die Bohrung kann jedoch auch von einer Durchgangsbohrung gebildet werden, wie es bei der Variante nach Figur 3 gezeigt ist. Die Bohrung 6" erstreckt sich von der Unterseite 12" des Kupplungsstangenbereichs 4" bis zur Oberseite 5" des Kupplungskopfes 3". Es versteht sich, dass die Spannschraube 10" kürzer als die durchgehende Bohrung 8" ist, so dass ein von der Spannschraube 10" freier, dem Schraubenkopf 11" entgegengesetzter Endbereich 14" der Durchgangsbohrung 6" vorhanden ist. Dieser nach außen mündende Endbereich 14" kann mittels eines in ihn eingesetzten Verschlussstopfens 15" verschlossen sein. Dabei kann der Verschlussstopfen 15" bei entsprechend langer Gewindepartie 8" in das Innengewinde 9" der Durchgangsbohrung 6" eingeschraubt sein.

Es versteht sich, dass auch bei der Ausführungsform nach Figur 1 die Bohrung 6 nach unten hin verlängert werden kann, so dass eine an der Unterseite des Kupplungsstangenbereichs 4 ausmündende Durchgangsbohrung gebildet wird.

Bei allen Ausführungsformen kann die Spannschraube 10, 10', 10" auch als Dehnschraube ausgebildet sein.

Die aus den Figuren 2 und 3 hervorgehende Lösung, d.h., ein Einschrauben der Spannschraube von unten nach oben, kann insbesondere dann von Vorteil sein, wenn der Durchmesser des Schraubenkopfes, bedingt durch einen größeren Durchmesser des Spannschraubenschaftes, im genormten Hüllbereich des Kupplungskopfes geometrisch nicht untergebracht werden kann.

## Patentansprüche

1. Anhängekupplung für Kraftfahrzeuge, die eine in ihrer Gebrauchsstellung nach hinten hin über das Kraftfahrzeug vorragende Kupplungsstange (1, 1', 1") mit endseitigem, einstückig angeformtem Kupplungsstangenhals (2, 2', 2") aufweist, an den ein kugeliger Kupplungskopf (3, 3', 3") zum lösbaren Befestigen eines Anhängers einstückig angesetzt ist, **dadurch gekennzeichnet, dass** der Kupplungsstangenhals (2, 2', 2") in axialer Richtung von einem Schraubenelement durchgriffen wird, das einerseits des Kupplungsstangenhalses (2, 2', 2") im Kupplungskopf (3, 3', 3") und andererseits des Kupplungsstangenhalses (2, 2', 2") im dem Kupplungsstangenhals benachbarten Bereich (4, 4', 4") der Kupplungsstange (1, 1', 1") verläuft, und dass der Kupplungsstangenhals (2, 2', 2") in sich materialverfestigt ist, indem er unter Verwendung einer von dem Schraubenelement gebildeten, zur Materialverfestigung vorgesehenen Spannschraube (10, 10', 10") als Zuganker fest zwischen dem Kupplungskopf (3, 3', 3") und dem dem Kupplungsstangenhals (2, 2', 2") benachbarten Bereich (4, 4', 4") der Kupplungsstange (1, 1', 1") verspannt ist.

2. Anhängekupplung nach Anspruch 1, **dadurch gekennzeichnet, dass** eine von der der Kupplungsstange (1) entgegengesetzten Oberseite (5) des Kupplungskopfes (3) ausgehende, sich in axialer Richtung (7) des Kupplungsstangenhalses (2) durch den Kupplungskopf (3) und den Kupplungsstangenhals (2) bis in den diesem benachbarten Kupplungsstangenbereich (4) erstreckende, zumindest im benachbarten Kupplungsstangenbereich (4) mit einem Innengewinde (9) versehene Bohrung (6) vorhanden ist, in die die Spannschraube (10) eingeschraubt ist, deren Schraubenkopf (11) sich am Kupplungskopf (3) abstützt.

3. Anhängekupplung nach Anspruch 1, **dadurch gekennzeichnet, dass** eine von der dem Kupplungskopf (3', 3") entgegengesetzten Unterseite (12', 12") der Kupplungsstange (1', 1") ausgehende, sich in axialer Richtung (7', 7") des Kupplungsstangenhalses (2', 2") durch den diesem benachbarten Kupplungsstangenbereich (4', 4") und den Kupplungsstangenhals (2', 2") bis in den Kupplungskopf (3', 3") erstreckende, zumindest im Kupplungskopf (3', 3") mit einem Innengewinde (9', 9") versehene Bohrung (6', 6") vorhanden ist, in die die Spannschraube (10', 10") eingeschraubt ist, deren Schraubenkopf (11', 11") sich am dem Kupplungsstangenhals (2', 2") benachbarten Kupplungsstangenbereich (4', 4") abstützt.

4. Anhängekupplung nach Anspruch 2 oder 3, **dadurch gekennzeichnet, dass** das Innengewinde (9 bzw. 9', 9") vom Kupplungskopf (3) bzw. vom dem Kupplungsstangenhals (2', 2") benachbarten Kupplungsstangenbereich (4', 4") aus gesehen jenseits des Kupplungsstangenhalses (2, 2', 2") angeordnet ist.

5. Anhängekupplung nach einem der Ansprüche 1 bis 4, **dadurch gekennzeichnet, dass** die Spannschraube (10, 10', 10") eine Dehnschraube ist.

6. Anhängekupplung nach einem der Ansprüche 1 bis 5, **dadurch gekennzeichnet, dass** der dem Schraubenkopf (11, 11', 11") zugewandte Endbereich (13, 13', 13") der Bohrung (6, 6', 6") zur Aufnahme des Schraubenkopfes (11, 11', 11") aufgeweitet ist.

7. Anhängekupplung nach einem der Ansprüche 1 bis 6, **dadurch gekennzeichnet, dass** die Bohrung (6) eine im dem Kupplungsstangenhals (2) benachbarten Kupplungsstangenbereich (4) bzw. im Kupplungskopf endende Sackbohrung ist.

8. Anhängekupplung nach einem der Ansprüche 1 bis 6, **dadurch gekennzeichnet, dass** die Bohrung (6") eine Durchgangsbohrung ist.

9. Anhängekupplung nach Anspruch 8, **dadurch gekennzeichnet, dass** der dem Schraubenkopf (11") entgegengesetzte Endbereich der Durchgangsbohrung (6") mittels eines in ihn eingesetzten Verschlussstopfens (15") verschlossen ist.

## Claims

1. Trailer coupling for motor vehicles which has a coupling rod (1, 1', 1") extending in its position of use to the rear beyond the motor vehicle, and with an integrally formed coupling rod neck (2, 2', 2") at its end, to which is integrally attached a spherical coupling head (3, 3', 3") for the releasable fastening of a trailer, **characterised in that** there is passing axially through the coupling rod neck (2, 2', 2") a bolt element which runs at one end of the coupling rod neck (2, 2', 2") in the coupling head (3, 3', 3"), and at the other end of the coupling rod neck (2, 2', 2") in the area (4, 4', 4") of the coupling rod (1, 1', 1 ") adjacent to the coupling rod neck, and that the coupling rod neck (2, 2', 2") is in itself material-hardened by being braced firmly between the coupling head (3, 3', 3") and the area (4, 4', 4") of the coupling rod (1, 1', 1") adjacent to the coupling rod neck (2, 2', 2"), by the use of a tensioning bolt (10, 10', 10") formed by the bolt element as a tie-rod provided for material hardening.

2. Trailer coupling according to claim 1, **characterised in that** there is provided a bore (6) starting from the top (5) of the coupling head (3) opposite the coupling rod (1), extending in the axial direction (7) of the coupling rod neck (2) through the coupling head (3) and the coupling rod neck (2) into the coupling rod area (4) adjacent to the latter, and provided with an internal thread (9) at least in the adjacent coupling rod area (4), into which the tensioning bolt (10) is screwed, with its bolt head (11) resting on the coupling head (3).

3. Trailer coupling according to claim , **characterised in that** there is provided a bore (6', 6") starting from the bottom (12', 12") of the coupling rod (1', 1") opposite the coupling head ( 3', 3"), extending in the axial direction (7', 7") of the coupling rod neck (2', 2") through the coupling rod area (4', 4") adjacent to the latter into the coupling head (3', 3"), and provided with an internal thread (9', 9") at least in the coupling head (3', 3"), into which the tensioning bolt (10', 10") is screwed, with its bolt head (11', 11 ") resting on the coupling rod area (4', 4") adjacent to the coupling rod neck (2', 2").

4. Trailer coupling according to claim 2 or 3, **characterised in that** the internal thread (9 and 9', 9" respectively), seen from the coupling head (3) or from the coupling rod area (4', 4") adjacent to the coupling rod neck (2', 2") is arranged on either side of the coupling rod neck (2, 2', 2").

5. Trailer coupling according to any of claims 1 to 4, **characterised in that** the tensioning bolt (10, 10', 10") is a stress bolt.

6. Trailer coupling according to any of claims 1 to 5, **characterised in that** the end section (13, 13', 13") of the bore (6, 6', 6") facing the bolt head (11, 11', 11") is expanded to accommodate the bolt head (11, 11', 11").

7. Trailer coupling according to any of claims 1 to 6, **characterised in that** the bore (6) is a blind bore ending in the coupling rod area (4) adjacent to the coupling rod neck (2) or in the coupling head.

8. Trailer coupling according to any of claims 1 to 6, **characterised in that** the bore (6") is a through bore.

9. Trailer coupling according to claim 8, **characterised in that** the end section of the through bore (6") opposite the bolt head (11") is closed by means of a sealing plug (15") inserted in it.

## Revendications

1. Attache remorque pour véhicules automobiles, qui comporte une barre d'attelage (1, 1', 1"), qui, dans la position de service, s'avance vers l'arrière au-dessus du véhicule et est munie sur une extrémité d'un col (2, 2', 2"), qui est formé d'un seul tenant avec ladite barre d'attelage et sur lequel est attachée d'un seul tenant une boule d'attelage (3, 3', 3") sphérique pour la fixation amovible d'une remorque, **caractérisée en ce que** le col (2, 2', 2") est traversé dans la direction axiale par un élément de vissage qui, sur un côté du col (2, 2', 2"), s'étend dans la boule d'attelage (3, 3', 3") et, sur l'autre côté du col (2, 2', 2"), dans la zone (4, 4', 4") de la barre d'attelage (1, 1', 1"), adjacente au col, et **en ce que** le col (2, 2', 2") est consolidé en soi avec son matériau, en étant bloqué fermement entre la boule d'attelage (3, 3', 3") et la zone (4, 4', 4") de la barre d'attelage (1, 1', 1"), adjacente au col (2, 2', 2"), moyennant l'utilisation d'une vis de serrage (10, 10', 10") en forme de tirant d'ancrage, formée par l'élément de vissage et prévue pour la consolidation du matériau.

2. Attache remorque selon la revendication 1, **caractérisée en ce qu'**il est prévu une forure (6), qui part du côté supérieur (5) de la boule d'attelage (3), opposé à la barre d'attelage (1), s'étend dans la direction axiale (7) du col (2) à travers la boule d'attelage (3) et le col (2) jusque dans la zone de barre (4), adjacente à celui-ci, est munie d'un filetage intérieur (9) au moins dans la zone de barre (4) adjacente, et dans laquelle est vissée la vis de serrage (10), dont la tête (11) prend appui sur la boule d'attelage (3).

3. Attache remorque selon la revendication 1, **caractérisée en ce qu'**il est prévu une forure (6', 6"), qui part du côté inférieur (12', 12") de la barre d'attelage (1', 1"), opposé à la boule d'attelage (3', 3"), s'étend dans la direction axiale (7', 7") du col (2', 2") à travers la zone de barre (4', 4"), adjacente à celui-ci, et le col (2', 2") jusque dans la boule d'attelage (3', 3"), est munie d'un filetage intérieur (9', 9") au moins dans la boule d'attelage (3', 3"), et dans laquelle est vissée la vis de serrage (10', 10"), dont la tête (11', 11") prend appui sur la zone de barre (4', 4"), adjacente au col (2', 2").

4. Attache remorque selon la revendication 2 ou 3, **caractérisée en ce que** le filetage intérieur (9 et respectivement 9', 9") est situé au-delà du col (2, 2', 2"), vu depuis la boule d'attelage (3) ou depuis la zone de barre (4', 4") adjacente au col (2', 2").

5. Attache remorque selon l'une quelconque des revendications 1 à 4, **caractérisée en ce que** la vis de serrage (10, 10', 10") est une vis d'expansion.

6. Attache remorque selon l'une quelconque des revendications 1 à 5, **caractérisée en ce que** la zone d'extrémité (13, 13', 13"), orientée vers la tête de vis (11, 11', 11"), de la forure (6, 6', 6") est élargie pour recevoir la tête de vis (11, 11', 11").

7. Attache remorque selon l'une quelconque des revendications 1 à 6, **caractérisée en ce que** la forure (6) est un trou borgne se terminant dans la zone de barre (4) adjacente au col (2) ou dans la boule d'attelage.

8. Attache remorque selon l'une quelconque des revendications 1 à 6, **caractérisée en ce que** la forure (6") est un trou débouchant.

9. Attache remorque selon la revendication 8, **caractérisé en ce que** la zone d'extrémité du trou débouchant (6"), opposée à la tête de vis (11 "), est fermée par un bouchon (15") introduit dans ledit trou débouchant.
